# EUROPÄISCHE PATENTANMELDUNG

(11) **EP 2 667 077 A1**
(43) Veröffentlichungstag der Anmeldung: **27.11.2013**
(21) Anmeldenummer: 13166201.7
(22) Anmeldetag: 02.05.2013
(51) Int. Cl.: F16L 59/22

(54) **Hitzeschutzmantel für einen Verbinder, Verbinder und Medienleitung**

(30) Priorität: 21.05.2012 DE 202012101851 U
(71) Anmelder: TI Automotive (Fuldabrück) GmbH, 34277 Fuldabrück (DE)
(72) Erfinder: Jensen, Hans, 73265 Dettingen unter Teck (DE); Barthel, Iris, 34270 Schauenburg (DE); Orth, Joachim, 34560 Fritzlar (DE); Häckel, Andre, 34513 Waldeck (DE)
(74) Vertreter: Rohmann, Michael

(57) **Zusammenfassung**

Hitzeschutzmantel (2) für einen Verbinder (1), insbesondere Schnellverbinder, einer SCR-Einrichtung und/oder für eine Medienleitung (4) einer SCR-Einrichtung. Der Mantel (2) weist zumindest ein Fasermaterial als hitzeisolierendes Material sowie zumindest eine das Fasermaterial abdeckende Schutzschicht (9) auf. Der den Verbinder (1) und/oder die Medienleitung (4) bedeckende Mantel (2) ist mittels zumindest einem wieder zu öffnenden bzw. wiederverschließbaren Verschlusselement (10) verschlossen.

## Beschreibung

Die Erfindung betrifft einen Hitzeschutzmantel für einen Verbinder - insbesondere für einen Schnellverbinder - und/oder für eine Medienleitung. Die Erfindung betrifft fernerhin auch einen Verbinder, insbesondere einen Schnellverbinder sowie eine Medienleitung. - Ein vorstehend genannter Verbinder weist normalerweise mindestens zwei Anschlussabschnitte für den Anschluss einer Medienleitung oder für den Anschluss eines Tanks oder dergleichen Aggregat auf. Mit einem Verbinder werden insbesondere zwei Medienleitungen miteinander verbunden oder eine Medienleitung mit einem Tank oder dergleichen Aggregat. In der Regel weist ein solcher Verbinder einen inneren Leitungskanal für die Durchleitung eines fluiden Mediums auf. Schnellverbinder meint insbesondere einen Verbinder, der zumindest einen Anschlussabschnitt aufweist, an dem über eine Rastverbindung und/oder Steckverbindung einfach und zügig ein Anschluss verwirklicht werden kann und in der Regel auch wieder gelöst werden kann.

Verbinder bzw. Schnellverbinder der eingangs genannten Art sind unter anderem auch in sogenannten SCR-Einrichtungen bzw. SCR-Systemen bekannt. In Kraftfahrzeugen, insbesondere in Fahrzeugen mit Dieselmotor, ist in der Regel ein solches SCR-System mit einem SCR-Katalysator für die Abgasbehandlung vorhanden (SCR: Selective Catalytic Reduction). Für eine effektive Reduzierung der im Abgas eines Kraftfahrzeuges enthaltenen Stickoxide wird im Abgas vor einem SCR-Katalysator eine Harnstofflösung zudosiert. Eine solche Harnstofflösung bzw. wässrige Harnstofflösung hat den Nachteil, dass Harnstoff bei Temperaturen unter -11°C gefriert und teilweise auskristallisiert. Dadurch wird eine weitere funktionssichere Zufuhr der Harnstofflösung behindert oder vollständig blockiert und eine effektive Reduzierung der Stickoxide im Abgas beeinträchtigt bzw. verhindert. Um derartige Störungen zu vermeiden, werden die Zuführungsleitungen bzw. Medienleitungen für die Harnstofflösung beheizt. Eine solche Beheizung kann beispielsweise mit elektrisch betriebenen Heizelementen in Form von Heizdrähten oder Heizfolien durchgeführt werden. Es ist auch bereits bekannt, Verbinder bzw. Schnellverbinder, insbesondere mit einer vorgenannten Medienleitung verbundene Verbinder bzw. Schnellverbinder entsprechend zu beheizen.

Die Komponenten von SCR-Einrichtungen bzw. SCR-Systemen sind relativ hohen Temperaturen ausgesetzt, vor allem die Komponenten des Systems, die im Bereich des Katalysators angeordnet sind. Das sind insbesondere auch Verbinder bzw. Schnellverbinder und Medienleitungen solcher SCR-Systeme. Die Komponenten der SCR-Systeme - beispielsweise die Schnellverbinder oder Medienleitungen - bestehen in der Regel aus Kunststoff. Deshalb können die einwirkenden hohen Temperaturen Beschädigungen der Komponenten eines SCR-Systems hervorrufen und das kann soweit führen, dass die Funktionsfähigkeit des SCR-Systems beeinträchtigt ist oder nicht mehr gegeben ist.

Demgegenüber liegt der Erfindung das technische Problem zugrunde, einen Hitzeschutzmantel und einen Verbinder sowie eine Medienleitung der eingangs genannten Art anzugeben, bei denen die vorstehend beschriebenen Nachteile vermieden werden können.

Zur Lösung dieses technischen Problems lehrt die Erfindung einen Hitzeschutzmantel für einen Verbinder - insbesondere für einen Schnellverbinder - einer SCR-Einrichtung und/oder für eine Medienleitung einer SCR-Einrichtung, wobei der Mantel zumindest ein Fasermaterial bzw. zumindest eine Art von Fasermaterial als hitzeisolierendes Material aufweist sowie zumindest eine das Fasermaterial zumindest bereichsweise abdeckende Schutzschicht aufweist und wobei der den Verbinder und/oder die Medienleitung bedeckende Mantel mittels zumindest einem wieder zu öffnenden bzw. wieder verschließbaren Verschlusselement verschlossen ist. Hier und nachfolgend wird der Hitzeschutzmantel auch kurz als Mantel bezeichnet. Bei der Medienleitung handelt es sich insbesondere um eine Medienleitung für eine wässrige Harnstofflösung und sehr bevorzugt um eine beheizbare Medienleitung für eine wässrige Harnstofflösung. Es liegt im Rahmen der Erfindung, dass der erfindungsgemäße Hitzeschutzmantel und der zugeordnete Verbinder und/oder die zugeordnete Medienleitung Komponenten eines SCR-Systems bzw. einer SCR-Einrichtung in einem Kraftfahrzeug sind. - Dass das zumindest eine Verschlusselement wieder zu öffnen bzw. wieder verschließbar ist, meint im Rahmen der Erfindung insbesondere, dass das Verschlusselement ohne großen Kraftaufwand und/oder Zuhilfenahme von Werkzeugen wieder zu öffnen bzw. wieder zu verschließen ist.

Nach besonders bevorzugter Ausführungsform der Erfindung besteht das Fasermaterial des Mantels zumindest zum Teil, vorzugsweise größtenteils und bevorzugt zu mindestens 80 Gew.-% aus Glasfasern. Besonders bevorzugt besteht das Fasermaterial zu mindestens 90 Gew.-% und ganz besonders bevorzugt vollständig aus Glasfasern. - Es empfiehlt sich, dass die Schutzschicht des Mantels eine wärmereflektierende bzw. hitzereflektierende Schutzschicht ist. Es hat sich bewährt, dass die Schutzschicht eine metallische Schutzschicht ist und insbesondere aus Aluminium bzw. im Wesentlichen aus Aluminium besteht. Gemäß einer Ausführungsform der Erfindung handelt es sich bei der Schutzschicht um eine gewebeverstärkte Schutzschicht. Zweckmäßigerweise beträgt die Dicke der Schutzschicht 0,2 bis 1,2 mm.

Eine empfohlene Ausführungsform der Erfindung ist dadurch gekennzeichnet, dass das zumindest eine Verschlusselement als Druckknopf ausgebildet ist. Nach einer anderen bevorzugten Ausführungsform der Erfindung ist das Verschlusselement als Klettverschluss ausgebildet. Es liegt im Rahmen der Erfindung, dass der erfindungsgemäße Hitzeschutzmantel zumindest zwei Verschlusselemente, beispielsweise zumindest zwei Druckknöpfe aufweist.

Gemäß einer Ausführungsvariante der Erfindung ist der Mantel im verschlossenen Zustand als lineare Röhre bzw. als im Wesentlichen lineare Röhre ausgebildet. In diesem Fall bedeckt der erfindungsgemäße Mantel insbesondere eine lineare Medienleitung und/oder einen linearen Verbinder bzw. Schnellverbinder mit zwei linear hintereinander angeordneten Anschlussabschnitten. Die Anschlussabschnitte des Verbinders sind dann in einem Winkel von 180° bzw. von etwa 180° zueinander angeordnet. Eine andere Ausführungsform der Erfindung ist dadurch gekennzeichnet, dass der Mantel im verschlossenen Zustand zwei zueinander abgewinkelte Röhrenabschnitte aufweist. Dann bedeckt der Mantel eine abgewinkelte Medienleitung oder einen winkelförmigen Verbinder bzw. Schnellverbinder mit zwei zueinander abgewinkelten Anschlussabschnitten. Der Winkel der Abwinklung beträgt beispielsweise 90° oder in etwa 90°. Es liegt im Rahmen der Erfindung, dass bei dieser abgewinkelten Ausführungsform des erfindungsgemäßen Hitzeschutzmantels jeder Röhrenabschnitt zumindest ein Verschlusselement bzw. ein Verschlusselement aufweist.

Zur Lösung des technischen Problems lehrt die Erfindung weiterhin einen Verbinder - insbesondere einen Schnellverbinder - einer SCR-Einrichtung mit einem den Verbinder zumindest bereichsweise bedeckenden Hitzeschutzmantel der oben beschriebenen Art. Es liegt im Rahmen der Erfindung, dass der Verbinder zumindest zwei Anschlussabschnitte aufweist und dass an zumindest einem dieser Anschlussabschnitte eine Medienleitung, insbesondere eine beheizbare Medienleitung angeschlossen ist. Bei der Medienleitung handelt es sich zweckmäßigerweise um eine Medienleitung für eine wässrige Harnstofflösung. Gemäß einer Ausführungsvariante ist an beiden Anschlussabschnitten des Verbinders jeweils eine Medienleitung angeschlossen. Eine andere Ausführungsform ist dadurch gekennzeichnet, dass an einem Anschlussabschnitt des Verbinders eine Medienleitung angeschlossen ist und an dem anderen Anschlussabschnitt ein Tank oder dergleichen Aggregat angeschlossen ist. Eine empfohlene Ausführungsform zeichnet sich dadurch aus, dass ein Hitzeschutzmantel für einen Verbinder bzw. Schnellverbinder auch einen Abschnitt der an den Verbinder angeschlossenen Medienleitung bedeckt. In diesem Fall erfüllt der Hitzeschutzmantel also zum einen die Funktion eines Hitzeschutzes für den Verbinder und zum anderen die Funktion eines Hitzeschutzes für den genannten Abschnitt der Medienleitung.

Eine sehr bevorzugte Ausführungsform ist dadurch gekennzeichnet, dass der Verbinder bzw. Schnellverbinder einen gegossenen und/oder gespritzten Außenmantel aus Kunststoff aufweist. Hierbei handelt es sich insbesondere um einen Schutzmantel für den Verbinder zum Schutz gegenüber mechanischen Einwirkungen und dergleichen. Der Außenmantel wird dabei aus einem thermoplastischen Kunststoff gegossen bzw. gespritzt. Dieser Kunststoff des Außenmantels ist relativ empfindlich gegenüber den hohen Temperaturen, denen eine SCR-Einrichtung insbesondere in der Nähe des Katalysators ausgesetzt ist. Deshalb hat sich der erfindungsgemäße Hitzeschutzmantel insbesondere für solche Verbinder bzw. Schnellverbinder mit einem gegossenen bzw. gespritzten Außenmantel aus Kunststoff bewährt. Der Hitzeschutzmantel bedeckt dabei den Außenmantel zumindest bereichsweise, vorzugsweise vollständig.

Gegenstand der Erfindung ist im Übrigen auch eine Medienleitung, insbesondere eine Medienleitung einer SCR-Einrichtung, mit einem die Medienleitung zumindest bereichsweise bedeckenden Hitzeschutzmantel der vorstehend beschriebenen Art. Bei der Medienleitung handelt es sich vorzugsweise um eine beheizbare Medienleitung für eine wässrige Harnstofflösung. Es liegt im Rahmen der Erfindung, dass ein Hitzeschutzmantel vorgesehen ist, der ausschließlich die Medienleitung bedeckt und schützt. Empfohlenermaßen weist die Medienleitung ein Innenrohr für die Durchleitung eines fluiden Mediums und ein das Innenrohr konzentrisch umgebendes Außenrohr auf. Zweckmäßigerweise ist zwischen Innenrohr und Außenrohr der Medienleitung zumindest ein Heizelement zur Beheizung des Innenrohres angeordnet.

Der Erfindung liegt die Erkenntnis zugrunde, dass mit dem erfindungsgemäßen Hitzeschutzmantel ein effektiver Hitzeschutz für Komponenten einer SCR-Einrichtung, insbesondere für Verbinder und Medienleitungen eines SCR-Systems erreicht werden kann. Ein funktionssicherer und wirksamer Hitzeschutz wird trotz der relativ hohen Temperaturen - denen SCR-Komponenten insbesondere an einigen Stellen des SCR-Systems ausgesetzt sind - gewährleistet. Dabei kann der erfindungsgemäße Hitzeschutzmantel auf verhältnismäßig einfache und kostengünstige Weise realisiert werden. Von besonderer Bedeutung ist, dass der erfindungsgemäße Hitzeschutzmantel wieder verwendbar ist. So kann er aufgrund seines zumindest einen erfindungsgemäßen Verschlusselementes - beispielsweise bei Wartungs- oder Reparaturarbeiten an dem SCR-System eines Kraftfahrzeuges - ohne weiteres und problemlos kurzfristig entfernt werden und anschließend wieder an dem Verbinder und/oder an der Medienleitung angebracht werden. In diesem Zusammenhang ist ein erfindungsgemäßer Hitzeschutzmantel auf sehr einfache und funktionssichere Weise zu öffnen und auch wieder zu verschließen.

Nachfolgend wird die Erfindung anhand einer lediglich ein Ausführungsbeispiel darstellenden Zeichnung näher erläutert. Es zeigen in schematischer Darstellung:
- Fig. 1: eine Ansicht eines Aggregates aus einem Schnellverbinder und einem erfindungsgemäßen Hitzeschutzmantel im noch nicht angebrachten bzw. noch nicht verschlossenen Zustand des Hitzeschutzmantels,
- Fig. 2: den Gegenstand nach Fig. 1 in bereits verschlossenem Zustand des Hitzeschutzmantels,
- Fig. 3: den Gegenstand gemäß Fig. 1 in einer zweiten Ausführungsform im noch nicht angebrachten bzw. noch nicht verschlossenem Zustand des Hitzeschutzmantels und
- Fig. 4: den Gegenstand nach Fig. 3 in bereits verschlossenem Zustand des Hitzeschutzmantels.

Die Figuren zeigen ein Aggregat aus einem Schnellverbinder 1 einer nicht näher dargestellten SCR-Einrichtung sowie einen für den Schnellverbinder 1 vorgesehenen erfindungsgemäßen Hitzeschutzmantel 2. Zweckmäßigerweise und im Ausführungsbeispiel nach den Figuren ist an einen ersten Anschlussabschnitt 3 des Schnellverbinders 1 eine beheizbare Medienleitung 4 für eine wässrige Harnstofflösung angeschlossen. Die Medienleitung 4 weist im Übrigen im Ausführungsbeispiel ein Innenrohr 5 und ein das Innenrohr konzentrisch umgebendes Außenrohr 6 auf. Zwischen Innenrohr 5 und Außenrohr 6 sind elektrisch betriebene Heizdrähte 7 zur Beheizung der Medienleitung 4 angeordnet. Zweckmäßigerweise ist der Schnellverbinder 1 mit einem in den Figuren nicht dargestellten inneren Leitungskanal für die wässrige Harnstofflösung ausgestattet. Es liegt im Rahmen der Erfindung, dass auch der Schnellverbinder 1 bzw. der innere Leitungskanal des Schnellverbinders 1 elektrisch beheizt wird.

Vorzugsweise und im Ausführungsbeispiel weist der erfindungsgemäße Hitzeschutzmantel 2 eine innere Schicht 8 aus Glasfasern als hitzeisolierendes Material auf. Fernerhin ist eine das Glasfasermaterial abdeckende äußere Schutzschicht 9 vorhanden, die empfohlenermaßen und im Ausführungsbeispiel als metallische Schutzschicht 9 aus Aluminium ausgebildet ist. Diese Schutzschicht 9 aus Aluminium wirkt als hitzereflektierende Schutzschicht 9 des erfindungsgemäßen Hitzeschutzmantels 2.

Im Ausführungsbeispiel nach den Figuren ist der den Schnellverbinder 1 bedeckende Hitzeschutzmantel 2 mit wieder zu öffnenden bzw. wieder verschließbaren Verschlusselementen in Form von Druckknöpfen 10 ausgestattet. Grundsätzlich könnten die Verschlusselemente auch als Klettverschlüsse oder als ähnlich wirkende Verschlusselemente ausgeführt sein.

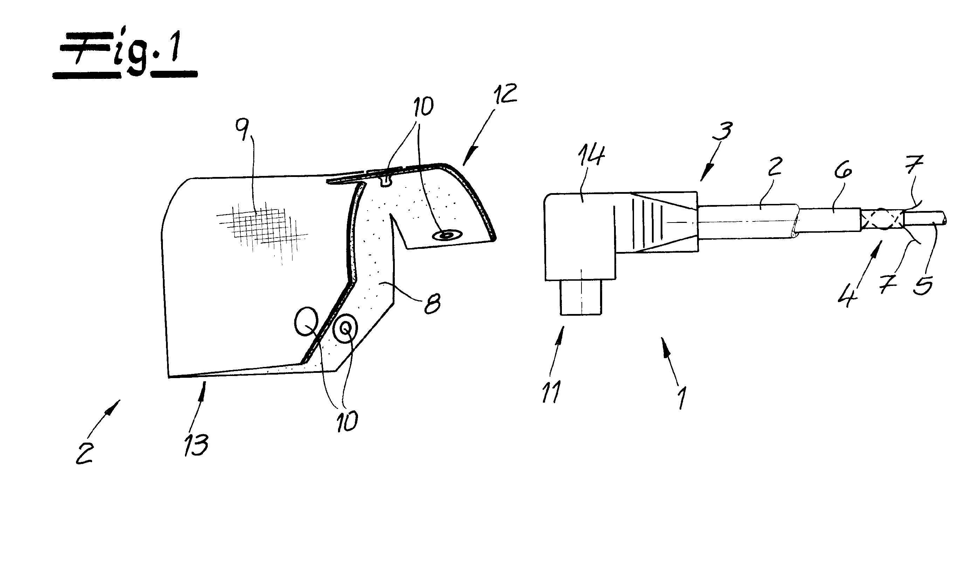

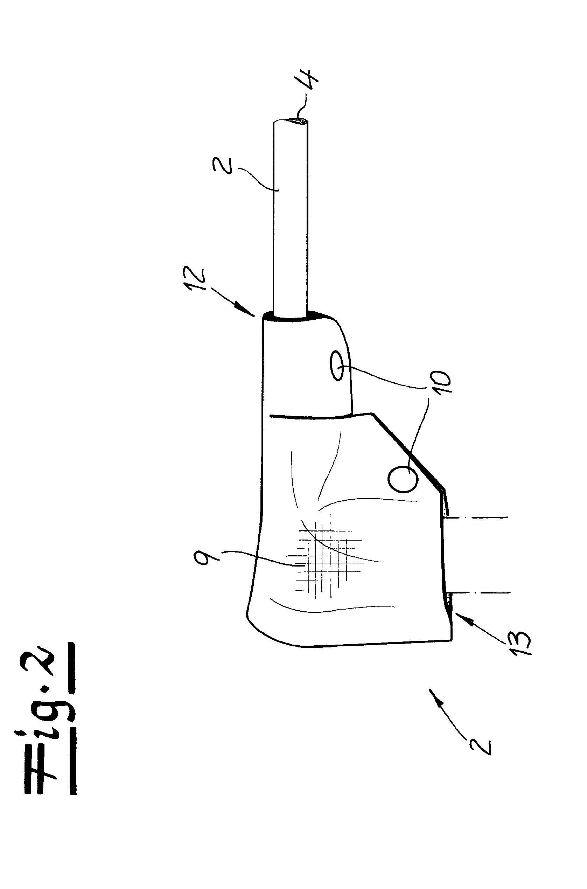

Im Ausführungsbeispiel nach den Figuren 1 und 2 ist der Schnellverbinder 1 ein winkelförmiger Schnellverbinder 1. Das bedeutet, dass der erste Anschlussabschnitt 3 abgewinkelt zu dem zweiten Anschlussabschnitt 11 angeordnet ist und zwar im Ausführungsbeispiel um einen Winkel von 90° abgewinkelt. In dem Ausführungsbeispiel gemäß den Fig. 1 und 2 weist der Hitzeschutzmantel 2 dementsprechend zwei zueinander abgewinkelte Röhrenabschnitte 12, 13 auf, die den beiden Anschlussabschnitten 3, 11 des Schnellverbinders 1 zugeordnet sind. Hier ist jedem Röhrenabschnitt 12, 13 des Hitzeschutzmantels 2 ein Druckknopf 10 zum Anbringen des Hitzeschutzmantels 2 an dem Schnellverbinder 1 bzw. zum Verschließen des Hitzeschutzmantels 2 zugeordnet. - Im Ausführungsbeispiel nach den Figuren weisen die Schnellverbinder 1 im Übrigen jeweils einen gegossenen Außenmantel 14 aus Kunststoff auf. Dieser Außenmantel 14 wird von dem erfindungsgemäßen Hitzeschutzmantel 2 umgeben.

Es ist noch darauf hinzuweisen, dass im Ausführungsbeispiel nach den Figuren 1 und 2 die Medienleitung 4 einen separaten, die Medienleitung 4 umgebenden Hitzeschutzmantel 2 aufweist. Dieser Hitzeschutzmantel 2 ist linear röhrenförmig ausgebildet.

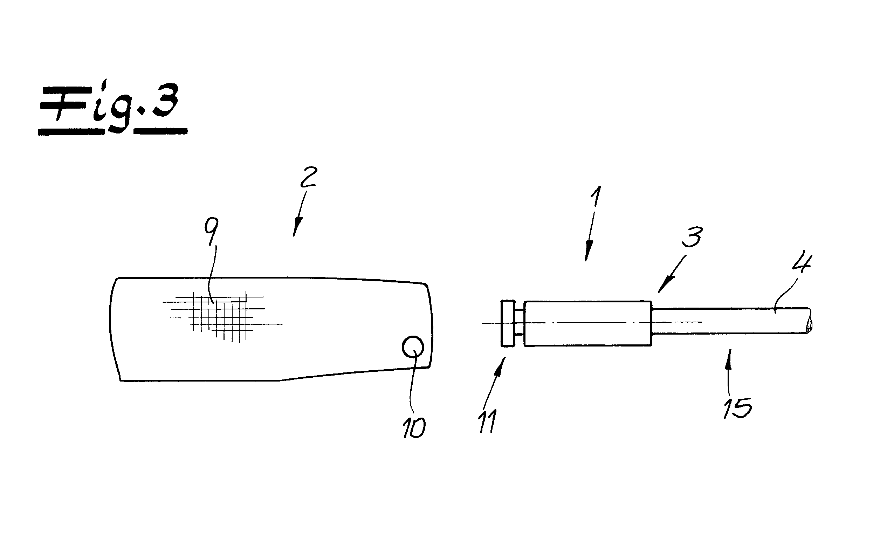

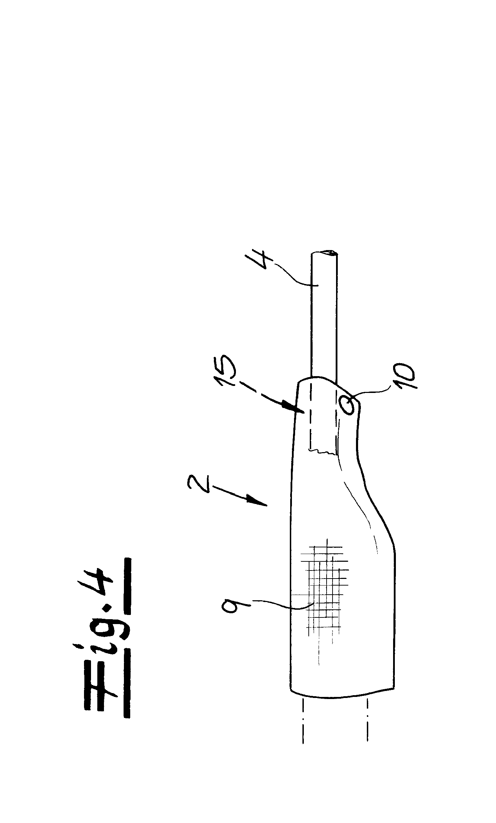

Die Figuren 3 und 4 zeigen ein Ausführungsbeispiel mit einem linearen Schnellverbinder 1. Hier sind die beiden Anschlussabschnitte 3 und 11 des Schnellverbinders 1 linear zueinander angeordnet, das heißt in einem Winkel von 180°. Der Hitzeschutzmantel 2 ist dementsprechend als lineare Röhre ausgebildet. Im Ausführungsbeispiel nach den Figuren 3 und 4 weist der Hitzeschutzmantel 2 im Übrigen lediglich einen Druckknopf 10 zum Anbringen an dem Schnellverbinder 1 bzw. zum Verschließen des Hitzeschutzmantels 2 auf. In der Fig. 4 ist erkennbar, dass zweckmäßigerweise und im Ausführungsbeispiel der lineare Hitzeschutzmantel 2 nicht nur den Schnellverbinder 1, sondern auch einen Abschnitt 15 der Medienleitung 4 abdeckt. Der Hitzeschutzmantel 2 funktioniert in diesem Ausführungsbeispiel also sowohl als Hitzeschutzmantel 2 für den Schnellverbinder 1 als auch als Hitzeschutzmantel 2 für einen Abschnitt 15 der Medienleitung 4.

An den zweiten Anschlussabschnitt 11 des in den Figuren dargestellten Schnellverbinders 1 kann im Übrigen über ein entsprechendes Steck- und Rastelement auch eine weitere Medienleitung 4 angeschlossen werden. Grundsätzlich kann aber auch ein Tank oder ein ähnliches Aggregat an diesem zweiten Anschlussabschnitt 11 angeschlossen werden.

## Patentansprüche

1. Hitzeschutzmantel (2) für einen Verbinder - insbesondere Schnellverbinder (1) - einer SCR-Einrichtung und/oder für eine Medienleitung (4) einer SCR-Einrichtung, wobei der Mantel (2) zumindest ein Fasermaterial als hitzeisolierendes Material sowie zumindest eine das Fasermaterial abdeckende Schutzschicht (9) aufweist und wobei der den Verbinder und/oder die Medienleitung (4) bedeckende Mantel (2) mittels zumindest einem wieder zu öffnenden bzw. wiederverschließbaren Verschlusselement verschlossen ist.

2. Hitzeschutzmantel nach Anspruch 1, wobei das Fasermaterial zumindest zum Teil, vorzugsweise größtenteils aus Glasfasern besteht.

3. Hitzeschutzmantel nach einem der Ansprüche 1 oder 2, wobei die Schutzschicht (9) eine hitzereflektierende Schutzschicht (9) ist.

4. Hitzeschutzmantel nach einem der Ansprüche 1 bis 3, wobei die Schutzschicht (9) eine metallische Schutzschicht (9), insbesondere aus Aluminium ist.

5. Hitzeschutzmantel nach einem Ansprüche 1 bis 4, wobei das Verschlusselement als Druckknopf (10) ausgebildet ist.

6. Hitzeschutzmantel nach einem der Ansprüche 1 bis 5, wobei das Verschlusselement als Klettverschluss ausgebildet ist.

7. Hitzeschutzmantel nach einem der Ansprüche 1 bis 6, wobei der Mantel (2) im verschlossenen Zustand als lineare Röhre bzw. als im Wesentlichen lineare Röhre ausgebildet ist.

8. Hitzeschutzmantel nach einem der Ansprüche 1 bis 6, wobei der Mantel (2) im verschlossenen Zustand zwei zueinander abgewinkelte Röhrenabschnitte (12, 13) aufweist.

9. Verbinder - insbesondere Schnellverbinder (1) - einer SCR-Einrichtung mit einem den Verbinder zumindest bereichsweise bedeckenden Hitzeschutzmantel (2) nach einem der Ansprüche 1 bis 8.

10. Verbinder nach Anspruch 9, wobei der Verbinder zumindest zwei Anschlussabschnitte (3, 11) aufweist und wobei an zumindest einem Anschlussabschnitt (3, 11) eine Medienleitung (4), insbesondere eine beheizbare Medienleitung (4) angeschlossen ist.

11. Verbinder nach Anspruch 10, wobei der Mantel (2) auch einen Abschnitt (15) der an den Verbinder angeschlossenen Medienleitung (4) bedeckt.

12. Verbinder nach einem der Ansprüche 9 bis 11, wobei der Verbinder zwei Anschlussabschnitte (3, 11) aufweist, die linear zueinander angeordnet sind.

13. Verbinder nach einem der Ansprüche 9 bis 12, wobei der Verbinder zwei Anschlussabschnitte (3, 11) aufweist, die abgewinkelt zueinander angeordnet sind, insbesondere in einem Winkel von 90° oder etwa 90° zueinander abgewinkelt angeordnet sind.

14. Verbinder nach einem der Ansprüche 9 bis 13, wobei der Verbinder einen gegossenen bzw. gespritzten Außenmantel (14) aus Kunststoff aufweist.

15. Medienleitung einer SCR-Einrichtung mit einem die Medienleitung (4) zumindest bereichsweise bedeckenden Hitzeschutzmantel (2) nach einem der Ansprüche 1 bis 8.
